# EUROPEAN PATENT SPECIFICATION

(11) **EP 2 775 853 B1**
(45) Date of publication and mention of the grant of the patent: **05.10.2016**
(21) Application number: 12781330.1
(22) Date of filing: 07.11.2012
(51) Int. Cl.: A23L 5/00, A23P 30/40

(54) **APPARATUS AND METHOD FOR AERATION OF A FOOD PRODUCT**
VORRICHTUNG UND VERFAHREN ZUR BELÜFTUNG EINES LEBENSMITTELS
APPAREIL ET PROCÉDÉ D'AÉRATION D'UN PRODUIT ALIMENTAIRE

(30) Priority: 07.11.2011 EP 11188129
(43) Date of publication of application: 17.09.2014
(73) Proprietor: Nestec S.A., 1800 Vevey (CH)
(72) Inventor: CHEVALIER, Jean-François, F-14100 Courtonne La Meurdrac (FR); CLAVIER MANRIQUE, Luis, F-14100 Lisieux (FR); KNAUF, Hermann, F-14100 Lisieux (FR)
(74) Representative: Cogniat, Eric Jean Marie
(86) International application number: PCT/EP2012/072068
(87) International publication number: WO 2013/068426

(56) References cited:
- WO-A1-91/07221
- DE-A1- 3 127 684
- GB-A- 888 264

## Description

### Field of the invention

The present invention relates to an apparatus for aeration, more particularly to an apparatus for the aeration of food products, and to a method for the aeration of food products.

### Background of the invention

The most common industrially applied methods of aerating liquid and semi-liquids products are based on mechanical aeration. Examples of commercial machines for the aeration of food products currently available on the market are machines such as those made by Mondomix ™. The commercially available machines vary somewhat in their design but the principles of their operation are generally similar. The mixing head of the commercially available Mondomix ™ machines is rotor/stator type mixing head comprising of a stainless steel rotor shaft covered with metal pegs which fit inside a housing that also has pegs inside of it. When assembled the pegs on the shaft and on the inside of the head intermesh to provide shear force on the product flow. A liquid phase and a gas phase merged before entering the mixing head. The mixing head mechanically crushes the large gas bubbles into very small bubbles that are trapped within the food matrix. The bubble size is key to determining the product attributes. Such machines are described in WO 91/07221 A1, GB 888,264 A or DE 31 27 684 A1.

Disadvantages of the commercially available systems include limitations on the flexibility of the apparatus, e.g. with respect to inlet of different fluids, rate of gas inlet, and/or the size of bubbles obtained amongst others.

Furthermore such systems are limited with respect to the homogeneous mixing and aeration of food products.

It is an object of the invention to provide an apparatus and method for the aeration of food products that overcomes one or more disadvantages of the known commercial systems.

It would be advantageous to provide an apparatus which is cost effective, flexible and applicable on an industrial scale.

It would be advantageous to provide an apparatus that can produce a stable, homogenous aeration of liquid or semi-liquid food products.

### Summary of the invention

The inventors have developed a substantially different apparatus and method to obtain aerated substances, particularly aerated food products, such as mousses.

In one aspect there is provided an apparatus for the aeration of food products comprising a mixing head having a plurality of sets of rotor-stator combinations. Each rotor-stator combination comprises a rotor and a stator with complementary toothed rims which are orientated in opposition in the axial direction. The rotor-stator sets are housed in a cylindrical tubular housing, having at one extremity an inlet cover. The inlet cover has a product inlet opening for receiving a product to be aerated. A gas injector is arranged on the inlet cover such that the head of the gas injector is located in a headspace defined by the inlet cover and a first rotor-stator set.

Advantageously the apparatus further comprises an insulating jacket surrounding at least a portion of the tubular housing.

Advantageously the apparatus further comprises a back-pressure regulator arranged in the flow path of product downstream of the mixing head.

The apparatus of the present invention makes it possible to produce a very homogenous distribution of gas in the product flow, and a uniform gas bubble distribution. Advantageously the apparatus of the invention enables the production of aerated products with smaller bubble size and more uniform bubble distribution through the product, than by the use of the commercially available aeration systems. This has the advantage of giving a more stable aerated product, and for example for food products can allow a longer shelf-life and/or to reduce the amounts of certain stabilising ingredients in the food product.

The apparatus of the invention is cost efficient and suitable for industrial application, particularly in the aeration of foodstuffs. Advantageously the apparatus of the present invention permits simpler and more cost effective sanitization process compared to conventional aeration apparatus. Advantageously, as described in more detail below, the apparatus of the invention is very flexible, for instance with respect to the injection of different fluids, different rates of fluid inlet, different working pressures, the range of product overrun obtainable, the size of bubbles obtained, amongst others.

In another aspect the invention provides a method of aerating a food product comprising passing a stream of food product to be aerated through an apparatus according to the invention, and injecting a gas into the food product stream in the headspace defined by the inlet cover and first rotor-stator set via the gas injector.

In a further aspect the application relates to aerated products produced by the method and/or apparatus of the invention. In another aspect the invention relates to the use of an apparatus according to the invention for the preparation of an aerated product, particularly and aerated food product.

These and other embodiments and potential advantageous will be apparent in the following detailed description and drawings.

### Brief description of the drawings

**Figure 1** shows a perspective view of an apparatus according to one embodiment of the invention illustrating a cut-section of a mixing head.

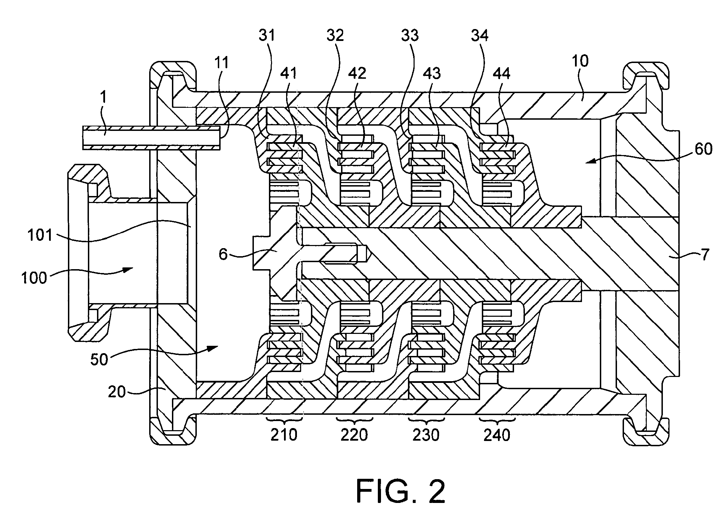

**Figure 2** shows a cross-section of a mixing head according to an embodiment of the invention.

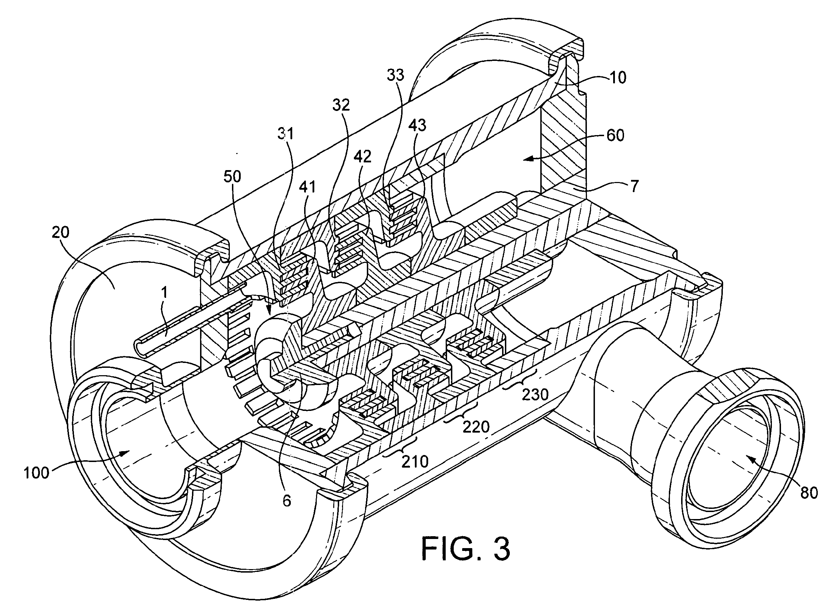

**Figure 3** shows a partial-section of a mixing head according to another embodiment of the invention.

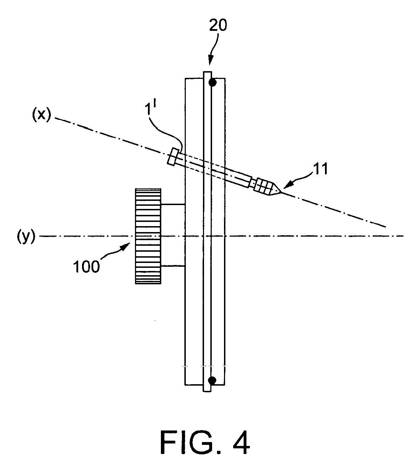

**Figure 4** shows a perspective view of an inlet cover for a mixing head according to one embodiment of the invention.

### Detailed description of the drawings

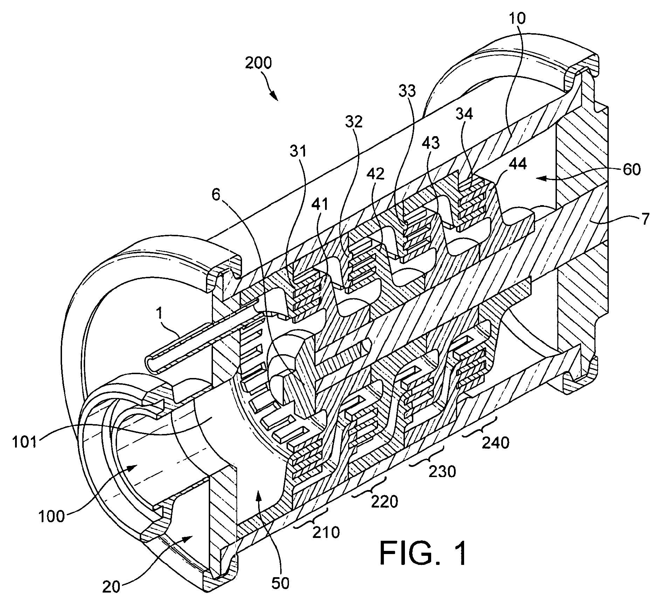

Referring to figure 1, there is presented a suitable mixing head 200 according to one embodiment of the invention. The mixing head 200 of figure 1 comprises a substantially tubular housing 10 in which are housed four sets or stages of rotor-stator combinations, 210, 220, 230, and 240. The rotor/stator sets or stages 210, 220, 230, and 240 are aligned in series along a central drive shaft 7.

Each rotor-stator set 210, 220, 230, and 240 comprises a rotor 41, 42, 43, 44 and a corresponding stator 31, 32, 33, 34. The rotors 41, 42, 43, 44 are coupled to the axial shaft 7 and rotatably driven around the central axis of the drive shaft by a motor/drive (not shown), coupled to the shaft through the screw 6. The motor/drive can be directly or indirectly coupled to the shaft 7. The direction of rotation may be clockwise or anti-clockwise about the central axis of the drive shaft. In the embodiment illustrated the stators 31, 32, 33, 34 are coupled to the internal wall of the cylindrical housing 10.

The rotors 41, 42, 43, 44 have toothed rims which engage with complementary toothed rims orientated in opposition in the axial direction on the stators 31, 32, 33, 34 have. Each rotor-stator set 210, 220, 230, 240 may comprise two or more rows of rotor-stator teeth. The number of rows of rotor-stator teeth on each rotor-stator stage 210, 220, 230, 240 may vary along the mixing head. In a particular embodiment the rotors and stators at all of the rotor-stator stages have the same number of sets of teeth. In preferred embodiments each rotor stator set comprises at least two sets or rows of rotor-stator teeth, in one embodiment each rotor stator set comprises three sets of rotor-stator teeth, in another embodiment each rotor stator set comprises four sets of rotor-stator teeth.

The number, width and/or spacing between rotor teeth can vary between the rows of teeth on a particular rotor in a particular rotor/stator set. In a preferred embodiment the spacing between the teeth is substantially the same on a particular rotor. The number, width and/or spacing between stator teeth can vary between the rows of teeth on a particular stator. In a preferred embodiment the the spacing between the teeth is substantially the same on a particular stator. In preferred embodiments the complementary axially opposed teeth on the rotor and stator of a particular rotor stator set have corresponding number, width and spacing. In embodiments, rotors 41, 42, 43 and 44 comprise at least 10 rotor teeth circumferentially spaced about the circumference of each rotor. In embodiments, stators 31, 32, 33 and 34 comprise more at least 10 stator teeth circumferentially spaced about the circumference of each stator.

The number, width and/or spacing of rotor/stator teeth can vary between the rotor-stator sets within a mixing head. In embodiments each rotor-stator set has substantially the same number, width and/or spacing of rotor/stator teeth. Advantageously the external diameter of the toothed rims of each rotor-stator set is substantially the same. Advantageously the internal diameter of the toothed rims of each rotor-stator set is substantially the same.

In some embodiments the mixing head comprises a plurality of rotor-stator sets. In certain embodiments the mixing head comprises at least two rotor-stator sets. In certain embodiments the mixing head comprises at least 3 rotor-stator sets. Generally, the mixing head contains no more than 8 rotor-stator heads. In some embodiments the mixing head contains no more than 6 rotor-stator sets. In certain embodiments the mixing head comprises three rotor-stator sets. In other embodiments the mixing head comprises four rotor-stator sets.

In some embodiments, each rotor-stator set is removable and interchangeable, offering flexibility. For instance different numbers, widths and spacing between the teeth of the rotor-stator toothed rims can therefore be changed as desired for at each rotor-stator set position within the mixing head depending on the properties of the substance to be aerated and the desired aeration result.

The mixing head 200 has a product inlet 100 in an inlet cover 20, configured for receiving a stream of a liquid or semi-liquid substance to be aerated from a product feed-line. In some embodiments the product inlet is located centrally in the in-let cover 20, along the axis of the shaft 7. A pump (not shown) may be used to urge the liquid or semi-liquid product into the mixing head and through the series of rotor-stator sets.

A gas injector 1,1' is positioned in the inlet cover 20 for the introduction of gas under pressure into the mixing head. In general gas may injected into the mixing head under a pressure in the range of from about 0.5 bars to about 10 bars. The inlet tip 11 of the gas injector is located in the head space 50 of the mixing head and thereby provides injection of the gas under pressure into the mixing head near to the toothed rims of the first rotor-stator set. The position of the gas injector is important for providing an efficient incorporation of the gas into the product stream. Advantageously the tip 11 of the gas injector is positioned proximate the inner toothed rim of the first rotor-stator set, whereby gas injected through the injector 1 will contact the teeth of the rotor-stator set directly after injection, so that the gas flow is subjected to the shear forces of the first rotor-stator set on entry in to the mixer head. This has the effect of producing regular gas bubbles in the product stream, making it possible to produce a homogenous distribution of gas through the product with a narrow distribution of gas bubble size. Especially, the distance between the tip 11 of the gas injector and the inner toothed rim of the first rotor-stator set 210 is shorter than the distance between the aperture 101 of the product inlet 100 and the inner toothed rim of the first rotor-stator set 210.

In certain embodiments the inlet tip 11 of the gas injector is positioned at a distance of no more than 4cm from the inner toothed rim of the first rotor-stator set. In some embodiments the inlet tip of the gas injector is located at a distance in the range of from about 0.1 cm to about 3cm from the inner teeth of the first rotor-stator set, preferably at a distance in the range of from about 0.2cm to about 2cm, for instance at a distance in the range of from about 0.5 to about 1.5 cm.

The gas injector can be positioned with its central axis (x) aligned at an angle of from 0° to about 85°, for example between 0° and 80° relative to the central axis of the mixing head (y). In certain embodiments the gas injector is inclined relative to the central axis of the mixing head, which permits to optimise the flow of the injected gas onto the teeth of the first rotor-stator set. The desired degree of inclination of the gas injector can be adjusted dependent on the location of the gas injector on the inlet cover, and the relative arrangement of the gas injector and the rotor-stator sets. For instance the central axis of the gas injector (x) may be inclined at an angle of from about 5° to about 85° relative to the central axis of the mixing head, preferably at an angle from about 10° to about 80°, for example about 10° to about 60°, for example at an angle of about 15° to about 45° relative to the central axis of the mixing head, e.g. at an angle from about 15° to about 30°. In other embodiments the gas injector can be positioned with its central axis (x) parallel to central axis and/or product inlet.

The position of injector head (tip) provides good control over the applied shearing and cutting forces and avoids the formation of gas pockets in the product stream. By having the injector head proximate the teeth of the first rotor/stator set provides a constant shear and cutting force on the injected gas on entry into the mixing head ensuring a uniform distribution of the gas into the body of the mixing head and into the rest of the series of rotor/stator sets. In this way the mixing head provides an efficient incorporation of gas into the product stream, and advantageously produces a very homogenous distribution of gas within the product stream at the outlet, with a substantially uniform gas bubble size.

More than one gas injector can be provided positioned in the inlet cover. In some embodiments two gas injectors are used, in other embodiments three gas injectors can be used.

All rotor stator sets in the mixing head 200 have the same internal and external diameter and are positioned aligned in series along the shaft 7 centred on the same central axis. This aligned configuration permits control on the shear and cutting forces applied along the mixing head and importantly allows to control a substantially constant flow rate of product through the mixing head, making it possible to maintain an advantageously uniform and small gas bubble size in the product at the outlet, which remains stable in the product. In contrast a conical configuration of the plurality of rotor/stator sets, in which each rotor/stator set has a larger diameter than the precedent, produces an acceleration of the product stream as it passes through the series of rotor/stator sets, reducing the residence time of the product in the mixing head, and causing the shear and cutting forces to substantially increase as the product stream advances through the series of rotor/stator sets, which leads to a less efficient gas incorporation, a less homogenous distribution of gas bubbles through the product and making it impossible to produce a product with narrow distribution of gas bubble size, and particularly with uniform and small gas bubble size.

In a preferred embodiment there is provided an insulating jacket (not shown) around the housing 10. The insulating jacket and the housing 10 define a space or vide there-between for circulation of a coolant or heating fluid. The insulating jacket has an inlet and an outlet for circulation of the coolant or heating fluid. Advantageously the use of an insulating jacket permits to maintain the product to be aerated at a constant temperature. In some embodiments a coolant fluid is circulated in the insulating jacket in order to maintain a chilled temperature in the product flowing through the mixing head. The circulation of a coolant fluid makes it possible to prevent the uptake of heat energy that would be generated by the rotation speeds inside the mixing head. Advantageously, this helps to maintain the degree and stability of the aeration in the product. Any coolant or heating fluid may be envisaged. Exemplary coolant fluids include air or water at cold temperature. The temperature of the coolant or heating fluid can be varied dependent on the product to be aerated and the desired aeration properties of the product.

In use product feed stream enters the mixing head through the aperture 101 of the inlet 100 in the inlet cover 20, into the headspace 50. The product feed stream entering inlet 100 is pumped serially through the rotor-stator sets 210, 220, 230, and exits the mixing head 200 via the product outlet (not shown). The rotors 222, 223, 224 of each generator rotate at high speed relative to the fixed stators 227, 228, 229, providing a high shear rate. The rotation speed of the rotors may be selected dependent on the product in question and the desired shear conditions. For example, a typical rotation speed may be from about 300 to 1500 RPM.

Gas entering the mixing head under pressure via the gas injector 1, 1" flows onto the toothed rims of the first rotor-stator set and is directly subjected to the high shear and cutting forces provided by the toothed rotor-stator set. The rotation of the rotors in each rotor-stator set pumps the product stream, and the gas bubbles, outwardly through the shear gaps between the rotor teeth and the stator teeth, creating a localized high shear condition. High shear forces exerted on the product stream in shear gaps between the rotor teeth and the stator teeth through which fluid flows provides homogenisation of the product stream and the production of a homogenous aeration of the product, with small gas bubbles. The position of the gas injector is important for an efficient incorporation of gas into the product stream, and advantageously produces a very homogenous distribution of gas within the product stream at the outlet, with a substantially uniform gas bubble size. The aerated product exits the mixing head 220 via the cavity 60 and a product outlet (not shown).

Advantageously the system of the present invention permits to provide aerated products with efficient incorporation of gas into the product base, i.e. very high rates of gas incorporation, otherwise referred to as overrun. For instance the mixing head of the inventions allows to provide an overrun of over 100%, even over 200% or 300%. Typically overrun of from 10% to 400%, for instance from 20% to 300% can be achieved. This high overrun is achieved whilst also having a homogenous distribution of the gas through the product, and with a narrow distribution of gas bubble size.

In some embodiments the shear rate (which varies proportionately with rotor speed and inversely with rotor/stator gap width) is varied with longitudinal position along the product flow path. For example, in some embodiments, the shear rate in the first rotor/stator stage is greater than the shear rate in a subsequent stage(s). This may be achieved, for instance, by increasing the rotation speed of the rotors in subsequent rotor-stator sets, or by decreasing the size of the shear gaps between toothed rims of the rotor-stator in subsequent rotor stator sets. Several different shear rates can be present in the head depending on the rotor-stator sets.

The aerated product stream flows out from the last rotor-stator set into a cavity 60 and out of the mixing head through an outlet 80. Advantageously the cavity space contributes to optimizing the expansion and stabilization of the aerated product. The number of rotor-stator sets and the size of the exit cavity 60 may be varied dependent on the extent of aeration, for instant as measured by % overrun, desired. In some embodiments a lower number of rotor-stator sets, for example one rotor-stator set, or two rotor-stator sets and a larger cavity space may be provided. A cavity may be provided alternatively or additionally between two consecutive rotor-stator sets along the flow direction of the mixing head.

Preferably a back-pressure regulator (not illustrated) is provided in the product stream downstream of the product outlet of the mixing head. In some embodiments the back-pressure regulator is in the form of a membrane back pressure valve, for example a double-membrane back-pressure valve. However other suitable back-pressure regulator systems are envisaged. Advantageously the back-pressure regulator allows controlling the pressure in the mixing chamber and ensuring steady flow of the product through the mixing head. If the pressure is too low the degree of aeration (overrun) may be reduced as the product base will be unable to hold the aeration. If, however, the pressure is too high the gas may be squeezed out of the product, again resulting in a reduced degree of aeration. The desired pressure in the chamber will depend amongst others on the product to be aerated and the desired degree of aeration. For instance, in general the working pressure in the mixing head is typically from about 0.5 to about 10 bars.

The mixing head of the invention may advantageously be used for the aeration of liquid and semi-liquid products in a wide variety of applications, for example in the food or cosmetic industries. Particular applications are for the aeration of liquid and semi-liquid foodstuffs, for instance in the aeration of dairy products, confectionery, ice-cream or other liquid and semi-liquid foodstuffs.

In other embodiment the invention provides a method of aerating a liquid or semi-liquid product, preferably a foodstuff, using a mixing head as described hereinabove.

In another embodiment the invention is directed to the use of a device as described above for the aeration of a liquid or semi-liquid foodstuff.

Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, and so forth). Use of broader terms such as comprises, includes, having, etc. should be understood to provide support for narrower terms such as consisting of, consisting essentially of, comprised substantially of, and the like.

It should be noted that embodiments and features described in the context of one of the aspects or embodiments of the present invention also apply to the other aspects of the invention.

## Claims

1. An apparatus for the aeration of food products comprising a mixing head [200] having a plurality of sets of rotor-stator combinations [210, 220, 230, 240] housed in a cylindrical tubular housing [10] and aligned in series along a central axis defined by a drive shaft [7], and an inlet cover [20] at one extremity of the cylindrical tubular housing, each rotor-stator combination comprising a rotor and a stator with complementary toothed rims which are orientated in opposition in the axial direction, the inlet cover having a product inlet opening [100] for receiving a product to be aerated and a gas injector [1, 1'] arranged thereon and traversing the inlet cover such that the head [11] of the gas injector is located in a headspace [50] defined by the inlet cover and a first rotor-stator set [210].

2. An apparatus according to claim 1, wherein the mixing head comprises from 2 to 5 sets of rotor-stator combinations [210, 220, 230, 240].

3. An apparatus according to any one of the preceding claims, wherein the rotors [41, 42, 42, 44] of the rotor-stator combinations are coupled to the drive shaft [7], and the stators [31, 32, 33, 34] are coupled to the housing [10].

4. An apparatus according to any one of the preceding claims, wherein the rotors and stators of each rotor-stator combination [210, 220, 230, 240] have at least two rows of opposed toothed rims, preferably at least three rows of opposed toothed rims.

5. An apparatus according to any one of the preceding claims, wherein the gas injector head [11] is located proximate the inner toothed rims of the first rotor-stator set [210].

6. An apparatus according to the preceding claim, wherein the distance between the gas injector head [11] and the inner toothed rims of the first rotor-stator set [210] is in the range of between 0.5 and 1.5 cm.

7. An apparatus according to any one of the preceding claims, wherein the gas injector [1, 1'] is inclined relative to the axial direction of the tubular housing [10].

8. An apparatus according to any one of the preceding claims, wherein the gas injector [1, 1'] is inclined relative to the axial direction of the tubular housing [10] at an angle in the range of between 0° and 80°.

9. An apparatus according to any one of the preceding claims comprising more than one gas injector.

10. An apparatus according to any one of the preceding claims comprising an insulating jacket [70] surrounding at least a portion of the cylindrical tubular housing [10].

11. An apparatus according to any one of the preceding claims comprising a back-pressure regulator arranged in the flowpath of product downstream of the mixing head.

12. A method of aerating a food product comprising passing a stream of food product to be aerated through an apparatus according to any one of the preceding claims, and injecting a gas into the food product stream in the headspace [50] defined by the inlet cover [20] and first rotor-stator set [210] via the gas injector [1, 1'].

13. Use of an apparatus according to any one of claims 1 to 12 for the aeration of a liquid or semi-liquid foodstuff.

## Patentansprüche

1. Vorrichtung zum Belüften von Lebensmittelprodukten, umfassend einen Mischkopf [200] mit einer Vielzahl von Sets von Rotor/Stator-Kombinationen [210, 220, 230, 240], untergebracht in einem zylindrischen Rohrgehäuse [10] und in Reihe entlang einer durch eine Antriebswelle [7] definierten Mittelachse ausgerichtet, und eine Einlassabdeckung [20] an einem Ende des zylindrischen Rohrgehäuses, wobei jede Rotor/Stator-Kombination einen Rotor und einen Stator mit komplementären Zahnkränzen umfasst, die in Axialrichtung einander gegenüberliegend ausgerichtet sind, wobei die Einlassabdeckung eine Produkteinlassöffnung [100] zur Aufnahme eines zu belüftenden Produkts und einen daran angeordneten Gasinjektor [1, 1'] aufweist, der durch die Einlassabdeckung hindurchgeht, so dass sich der Kopf [11] des Gasinjektors in einem Gasraum [50] befindet, der durch die Einlassabdeckung und ein erstes Rotor/Stator-Set [210] definiert ist.

2. Vorrichtung nach Anspruch 1, wobei der Mischkopf von 2 bis 5 Sets von Rotor/Stator-Kombinationen [210, 220, 230, 240] umfasst.

3. Vorrichtung nach einem der vorstehenden Ansprüche, wobei die Rotoren [41, 42, 42, 44] der Rotor/Stator-Kombinationen an die Antriebswelle [7] gekoppelt sind und die Statoren [31, 32, 33, 34] an das Gehäuse [10] gekoppelt sind.

4. Vorrichtung nach einem der vorstehenden Ansprüche, wobei die Rotoren und Statoren einer jeden Rotor/Stator-Kombination [210, 220, 230, 240] mindestens zwei Reihen einander gegenüberliegender Zahnkränze aufweisen, vorzugsweise mindestens drei Reihen gegenüberliegender Zahnkränze.

5. Vorrichtung nach einem der vorstehenden Ansprüche, wobei der Gasinjektorkopf [11] in der Nähe der inneren Zahnkränze des ersten Rotor/Stator-Sets [210] angeordnet ist.

6. Vorrichtung nach dem vorstehenden Anspruch, wobei der Abstand zwischen dem Gasinjektorkopf [11] und den inneren Zahnkränzen des ersten Rotor/Stator-Sets [210] im Bereich zwischen 0,5 und 1,5 cm liegt.

7. Vorrichtung nach einem der vorstehenden Ansprüche, wobei der Gasinjektor [1, 1'] relativ zur Axialrichtung des Rohrgehäuses [10] geneigt ist.

8. Vorrichtung nach einem der vorstehenden Ansprüche, wobei der Gasinjektor [1, 1'] relativ zur Axialrichtung des Rohrgehäuses [10] in einem Winkel im Bereich zwischen 0° und 80° geneigt ist.

9. Vorrichtung nach einem der vorstehenden Ansprüche, die mehr als einen Gasinjektor umfasst.

10. Vorrichtung nach einem der vorstehenden Ansprüche, umfassend einen Isoliermantel [70], der mindestens einen Teil des zylindrischen Rohrgehäuses [10] umgibt.

11. Vorrichtung nach einem der vorstehenden Ansprüche, umfassend einen Gegendruckregler, der im Strömungspfad des Produkts dem Mischkopf nachgeschaltet angeordnet ist.

12. Verfahren zum Belüften eines Lebensmittelprodukts, umfassend das Lenken eines Stroms des zu belüftenden Lebensmittelprodukts durch eine Vorrichtung nach einem der vorstehenden Ansprüche und das Injizieren eines Gases durch den Gasinjektor [1, 1'] in den Lebensmittelproduktstrom im Gasraum [50], der durch die Einlassabdeckung [20] und ein erstes Rotor/Stator-Set [210] definiert ist.

13. Verwendung einer Vorrichtung nach einem der Ansprüche 1 bis 12 zum Belüften eines flüssigen oder halbflüssigen Lebensmittels.

## Revendications

1. Appareil pour l'aération de produits alimentaires comprenant une tête de mélange [200] ayant une pluralité d'ensembles de combinaisons rotor-stator [210, 220, 230, 240] logés dans un boîtier tubulaire cylindrique [10] et alignés en série le long d'un axe central défini par un arbre d'entraînement [7] et un capot d'entrée [20] au niveau d'une extrémité du boîtier tubulaire cylindrique, chaque combinaison de rotor-stator comprenant un rotor et un stator avec des bords dentelés complémentaires qui sont orientés en opposition dans la direction axiale, le capot d'entrée ayant une ouverture d'entrée de produit [100] destinée à recevoir un produit à aérer et un injecteur de gaz [1, 1'] agencé sur celle-ci et traversant le capot d'entrée, de sorte que la tête [11] de l'injecteur de gaz soit située dans un espace de tête [50] défini par le capot d'entrée et un premier ensemble rotor-stator [210].

2. Appareil selon la revendication 1, dans lequel la tête de mélange comprend de 2 à 5 ensembles de combinaisons rotor-stator [210, 220, 230, 240].

3. Appareil selon l'une quelconque des revendications précédentes, dans lequel les rotors [41, 42, 42, 44] des combinaisons rotor-stator sont couplés à l'arbre d'entraînement [7] et les stators [31, 32, 33, 34] sont couplés au boîtier [10].

4. Appareil selon l'une quelconque des revendications précédentes, dans lequel les rotors et stators de chaque combinaison rotor-stator [210, 220, 230, 240] ont au moins deux rangées de bords dentelés opposés, de préférence au moins trois rangées de bords dentelés opposés.

5. Appareil selon l'une quelconque des revendications précédentes, dans lequel la tête d'injecteur de gaz [11] est située à proximité des bords dentelés internes du premier ensemble rotor-stator [210].

6. Appareil selon la revendication précédente, dans lequel la distance entre la tête d'injecteur de gaz [11] et les bords dentelés internes du premier ensemble rotor-stator [210] se trouve dans la plage allant de 0,5 à 1,5 cm.

7. Appareil selon l'une quelconque des revendications précédentes, dans lequel l'injecteur de gaz [1, 1'] est incliné par rapport à la direction axiale du boîtier tubulaire [10].

8. Appareil selon l'une quelconque des revendications précédentes, dans lequel l'injecteur de gaz [1, 1'] est incliné par rapport à la direction axiale du boîtier tubulaire [10] selon un angle dans la plage allant de 0 ° à 80 °.

9. Appareil selon l'une quelconque des revendications précédentes, comprenant plus d'un injecteur de gaz.

10. Appareil selon l'une quelconque des revendications précédentes, comprenant une gaine isolante [70] entourant au moins une portion du boîtier tubulaire cylindrique [10].

11. Appareil selon l'une quelconque des revendications précédentes, comprenant un régulateur de contre-pression agencé dans le trajet d'écoulement du produit en aval de la tête de mélange.

12. Procédé d'aération d'un produit alimentaire comprenant le passage d'un flux de produit alimentaire à aérer à travers un appareil selon l'une quelconque des revendications précédentes, puis l'injection d'un gaz dans le flux de produit alimentaire dans l'espace de tête [50] défini par le capot d'entrée [20] et le premier ensemble rotor-stator [210] par le biais de l'injecteur de gaz [1, 1'].

13. Utilisation d'un appareil selon l'une quelconque des revendications 1 à 12 pour l'aération d'un produit alimentaire liquide ou semi-liquide.
